# EUROPÄISCHE PATENTSCHRIFT

(11) **EP 2 993 248 B1**
(45) Veröffentlichungstag und Bekanntmachung des Hinweises auf die Patenterteilung: **24.06.2020**
(21) Anmeldenummer: 14183757.5
(22) Anmeldetag: 05.09.2014
(51) Int. Cl.: C23C 2/12, C21D 1/673, C23C 2/26

(54) **Stahlflachprodukt mit einer Al-Beschichtung, Verfahren zu seiner Herstellung, und Verfahren zur Herstellung eines warmgeformten Bauteils**
Flat steel product with an Al coating, method for producing the same, and method for producing a hot-formed steel component
Produit plat en acier doté d'un revêtement Al, son procédé de fabrication, et procédé de fabrication d'un composant en acier formé à chaud

(43) Veröffentlichungstag der Anmeldung: 09.03.2016
(73) Patentinhaber: ThyssenKrupp Steel Europe AG, 47166 Duisburg (DE); thyssenkrupp AG, 45143 Essen (DE)
(72) Erfinder: Banik, Janko, 58762 Altena (DE); Etzold, Urlich, 47647 Kerken (DE); Rössler, Norbert, 40477 Düsseldorf (DE); Ruthenberg, Manuela, 44143 Dortmund (DE); Wuttke, Thiemo, 45659 Recklinghausen (DE)
(74) Vertreter: Cohausz & Florack

(56) Entgegenhaltungen:
- EP-A2- 2 377 965
- JP-A- 2005 238 286
- JP-A- 2006 299 377
- JP-A- 2009 120 942
- JP-A- 2011 137 210
- KR-B1- 100 872 569
- US-A1- 2012 085 467

## Beschreibung

Die Erfindung betrifft ein Stahlflachprodukt, das aus einem Stahlsubstrat, das aus einem Stahl, der 0,1 - 3 Gew.-% Mn und 0,0005 - 0,01 Gew.-% B aufweist, und einem auf das Stahlsubstrat aufgetragenen Schutzüberzug auf Basis von Al besteht, der optional in Summe bis zu 20 Gew.-% an anderen Legierungselementen enthält.

Ebenso betrifft die Erfindung ein Verfahren zur Herstellung eines erfindungsgemäßen Stahlflachprodukts.

Des Weiteren wird ein Stahlbauteil, hergestellt durch Warmpressformhärten beschrieben.

Schließlich betrifft die Erfindung auch ein Verfahren zur Herstellung eines warmgeformten Stahlbauteils.

Unter den Begriff "Stahlflachprodukt" fallen hier alle Walzprodukte, deren Länge sehr viel größer ist als ihre Dicke. Hierzu zählen Stahlbänder und -bleche sowie daraus gewonnene Zuschnitte und Platinen.

Wenn hier Angaben zu Gehalten von Legierungen gemacht werden, sind diese immer als Angaben in "Gew.-%" zu verstehen, sofern nicht ausdrücklich etwas anderes angegeben ist.

Das Stahlsubstrat erfindungsgemäßer Stahlflachprodukte besteht aus so genanntem "MnB-Stahl". Stähle dieser Art sind in der EN 10083-3 genormt. Diese Stähle besitzen eine gute Härtbarkeit und erlauben beim Warmpressen eine sichere Prozessführung, durch die es auf wirtschaftliche Weise möglich ist, im Zuge der Warmverformung eine Martensithärtung noch im Werkzeug ohne zusätzliche Kühlung zu bewirken. Ein typisches Beispiel für einen solchen Stahl ist der unter der Bezeichnung 22MnB5 bekannte Stahl, der im Stahlschlüssel 2004 unter der Werkstoffnummer 1.5528 zu finden ist.

Typischerweise enthält auf dem Markt erhältlicher, vollberuhigter 22MnB5-Stahl neben Eisen und unvermeidbaren Verunreinigungen (in Gew.-%) 0,10 - 0,250 % C, 1,0 - 1,4 % Mn, 0,35 - 0,4 % Si, bis zu 0,03 % P, bis zu 0,01 % S, bis zu 0,040 % Al, bis zu 0,15 % Ti, bis zu 0,1 % Nb, in Summe bis zu 0,5 % Cr + Mo, sowie bis zu 0,005 % B.

Für warmgewalzte und mit einer Al-Beschichtung versehene MnB-Stahlbleche, die zum Herstellen von Stahlbauteilen durch Warmpressformhärten bestimmt sind, ist in der EP 0 971 044 B1 eine Legierungsvorschrift angegeben, gemäß der ein MnB-Stahl neben Eisen und unvermeidbaren Verunreinigungen (in Gew.-%) einen Kohlenstoffgehalt von mehr als 0,20 %, jedoch weniger als 0,5 %, einen Mangangehalt von mehr als 0,5 %, jedoch weniger als 3 %, einen Siliziumgehalt von mehr als 0,1 %, jedoch weniger als 0,5 %, einen Chromgehalt von mehr als 0,01 %, jedoch weniger als 1 %, einen Titangehalt von weniger als 0,2 %, einen Aluminiumgehalt von weniger als 0,1 %, einen Phosphorgehalt von weniger als 0,1 %, einen Schwefelgehalt von weniger als 0,05 % und einen Borgehalt von mehr als 0,0005 %, jedoch weniger als 0,08 % aufweisen soll. Bei der Al-Beschichtung handelt es sich um eine so genannte AlSi-Beschichtung, die aus 9 - 10 Gew.-% Si, 2 - 3,5 Gew.-% Eisen und als Rest aus Aluminium besteht. Die so beschaffenen und beschichteten Stahlflachprodukte werden auf eine Erwärmungstemperatur von mehr als 700 °C erwärmt, anschließend in ein Pressformwerkzeug eingelegt, dort warm zu dem Stahlbauteil geformt und dabei so schnell abgekühlt, dass Härtegefüge im Stahlsubstrat des Stahlflachprodukts entsteht.

JP2011137210A offenbart ein feueraluminiertes Stahlblech (22MnB5) zum Warmumformen, wobei die Al-basierte Beschichtung die folgenden Legierungselemente enthält: 3-15 Gew.-% Si, Fe als unvermeidbare Verunreinigung und eine Kombination von 0.05-1.0 Gew.-% Mn, 0.05-1.0 Gew.-% Mg, 0.05-0.5 Gew.-% Cr und 0.05-0.5 Gew.-% Mo.

JP2006299377A offenbart ein feueraluminiertes Stahlblech (22MnB5) zum Warmumformen, dessen Al-basierte Beschichtung folgenden Legierungselemente enthält: 3-15 Gew.-% Si, Fe als unvermeidbare Verunreinigung, 0.1-1.0 Gew.-% Cr, 0.1-1.0 Gew.-% Ti und 1.0-5.0 Gew.-% Sn, und zusätzlich mindestens ein Erdalkalimetall, z.B. Mg, Ca, Sr, Ba.

KR100872569B1 offenbart ein B und Mn aufweisendes Stahlblech zum Warmumformen, wobei das Stahlblech mit einem Al-10Si -3Bi- 0.3 Mg System (in Gew.-%) beschichtet wird.

JP2009120942A offenbart ein Stahlflachprodukt, beschichtet mit einer Schicht auf Al-Basis besteht, wobei die Schicht neben Al die folgenden Legierungselemente enthält (in Gew.-%): 0.5 Mg, 0.2 Ca, 0.1 Si, 12 Fe and 0.06 La-Ce.

Im Anlieferungszustand sind alle Mangan-Bor-Stahlgüten wasserstoffarm. Ihre Gehalte an diffusiblem Wasserstoff liegen jeweils unterhalb der Nachweisgrenze von derzeit 0,1 ppm. Infolge dessen zeigen MnB-Stähle grundsätzlich nur eine geringe Neigung zur wasserstoffinduzierten verspäteten Rissbildung.

In der Praxis hat sich jedoch gezeigt, dass es bei der Warmumformung von mit aluminiumbasierten Schutzüberzügen beschichteten Mangan-Bor-Stählen bei feuchteren Ofenatmosphären zu einer Wasserstoffanreicherung im Stahlsubstrat kommt. Als Grund hierfür ist eine Metall-Wasserdampf Reaktion identifiziert worden. Zu dieser Reaktion kommt es, wenn das mit der Al-Beschichtung versehene Stahlflachprodukt für die Warmumformung in einem Erwärmungsofen unter einer Wasserdampf enthaltenden Atmosphäre auf höhere Temperaturen erwärmt wird. Dabei reagiert der in der Ofenatmosphäre befindliche Wasserdampf an der Werkstoffoberfläche zu Wasserstoff und einem Metalloxid. Der entstehende Wasserstoff diffundiert in den Stahlwerkstoff und kann dann dort zu einem verzögerten Versagen führen, indem er sich bevorzugt in Bereichen hoher Zug-Eigenspannung konzentriert. Wird eine lokal sehr hohe Wasserstoffkonzentration erreicht, schwächt dies die Bindung an den Korngrenzen des Stahlsubstratgefüges soweit, dass es im Gebrauch infolge der dabei auftretenden Spannung zu einem Riss entlang der Korngrenze kommt.

Zur Vermeidung des Wasserstoffeintrags infolge der Oberflächenreaktion im Ofen werden häufig Taupunktregeleinrichtungen eingesetzt. Ziel ist es hier, das Wasserdampfangebot in der Ofenatmosphäre zu begrenzen.

Ein Beispiel für ein solches Vorgehen ist das in der EP 1 767 286 A1 beschriebene Verfahren. Bei diesem Verfahren wird ein mit einer Al- oder Zn-Beschichtung versehenes Stahlflachprodukt für seine Warmumformung unter einer trockenen Atmosphäre, deren Wasserstoffgehalt nicht mehr als 6 Vol.-%, bevorzugt nicht mehr als 1 Vol.-%, beträgt und deren Taupunkt bei höchstens 10 °C gehalten wird, auf eine Temperatur erwärmt, die mindestens gleich der Ac3-Temperatur und höchstens gleich 1100 °C ist. Während das Stahlsubstrat des derart erwärmten Stahlflachprodukts bevorzugt aus einem MnB-Stahl mit 0,05 - 0,5 Gew.-% C, 0,5 - 3 Gew.-% Mn und bis zu 0,05 Gew.-% B besteht, können in seiner Al- und Zn-Beschichtung zur Verbesserung des Korrosionsschutzes jeweils 0,1 - 1 Gew.-% Cr, 0,5 - 10 Gew.-% Mg, 0,1 - 1 Gew.-% Ti oder 1 - 5 Gew.-% Sn enthalten sein. Die Al-Beschichtung ist dabei bevorzugt eine AlSi-Beschichtung mit 3 - 15 Gew.-% Si. Eisen kann in der Al-Beschichtung als Verunreinigung in Gehalten von typischerweise 0,05 - 0,5 Gew.-% enthalten sein. Keines der in der EP 1 767 286 A1 vorgestellten Ausführungsbeispiele beschäftigt sich allerdings mit einem AlSi-Überzug, der neben den unvermeidbaren Fe-Verunreinigungen einen zusätzlichen Legierungsbestandteil enthält.

Insbesondere in Regionen, in denen hohe Luftfeuchtigkeit die Regel ist, verursacht der für die Bereitstellung ausreichender Mengen an trockener Luft oder trockenem Stickstoff erforderliche Aufwand erhebliche Betriebskosten.

Vor dem Hintergrund des Standes der Technik bestand die Aufgabe der Erfindung darin, ein Stahlflachprodukt der eingangs angegebenen zu schaffen, bei dem die Wasserstoffaufnahme bei der für ein Warmumformen erforderlichen Erwärmung minimiert ist. Darüber hinaus sollte ein Verfahren zur Herstellung eines solchen Stahlflachprodukts und ein Verfahren zur Herstellung eines warmgeformten Stahlbauteils angegeben werden.

In Bezug auf das Stahlflachprodukt hat die Erfindung diese Aufgabe dadurch gelöst, dass ein solches Stahlflachprodukt gemäß Anspruch 1 ausgebildet ist.

Ein Verfahren zur Herstellung eines erfindungsgemäßen Stahlflachprodukts ist in Anspruch 5 angegeben.

Ein Verfahren zur Herstellung eines warmgeformten Stahlbauteils geht schließlich aus Anspruch 7 hervor.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes Stahlflachprodukt umfasst ein Stahlsubstrat, das aus einem Stahl, der 0,1 - 3 Gew.-% Mn und 0,0005 - 0,01 Gew.-% B aufweist, und einen auf das Stahlsubstrat aufgetragenen Schutzüberzug auf Basis von Aluminium, der optional in Summe bis zu 20 Gew.-% an anderen Legierungselementen enthält.

Erfindungsgemäß handelt es sich bei dem Al-basierte Schutzüberzug um einen AlSi-Überzug mit einem Si-Gehalt von 3-15 Gew.-% und optional bis zu 5 Gew.-% Fe, der nun als zusätzliche Legierungsbestandteile in Summe 0,11 - 0,7 Gew.-% mindestens zwei Elemente aus der Gruppe der Erdalkali- oder Übergangsmetalle, welche eine höhere Sauerstoffaffinität haben als Aluminium, mit der Maßgabe, dass der Magnesium-Gehalt des Schutzüberzugs mindestens 0,1 Gew.-% und der Kalzium-Gehalt des Schutzüberzugs mindestens 0,01 Gew.-% beträgt, und optional in Summe bis zu 20 Gew.-% an anderen Legierungselementen enthält.

Die erfindungsgemäß in geringen Mengen dem Al-Überzug beigegebenen zusätzlichen Legierungsbestandteile zeichnen sich durch eine höhere Sauerstoffaffinität aus als der Hauptbestandteil Aluminium des Schutzüberzugs. Bereits bei Anwesenheit von derart geringen Mengen eines Erdalkali- oder Übergangsmetalls entsteht auf der Oberfläche des Schutzüberzugs eine dünne Oxidschicht, die das zwischen ihr und dem Stahlsubstrat liegende Aluminium abdeckt. Diese dünne Schicht behindert bei der für die Warmumformung des Stahlflachprodukts erforderlichen Erwärmung eine Reaktion des Aluminiums mit der Feuchtigkeit, die in der Atmosphäre des für die Erwärmung des Stahlflachprodukts verwendeten Ofens vorhanden ist. Eine Oxidation des Aluminiums des Überzugs und eine damit einhergehende Freisetzung von Wasserstoff, der in den Überzug und das Stahlsubstrat des Stahlflachprodukts eindiffundieren könnte, werden so effektiv verhindert. Dies gilt überraschenderweise insbesondere auch dann, wenn der Al-basierte Überzug in Folge der Erwärmung lokal schmelzflüssig wird und seine Oberfläche aufreißt, so dass schmelzflüssiges Überzugsmaterial mit der Ofenatmosphäre in Kontakt kommt. Insbesondere bei längeren Glühdauern zeigt sich bei erfindungsgemäßen Stahlflachprodukten eine gegenüber konventionell mit einer Al-Beschichtung versehenen Stahlflachprodukten geringere Wasserstoffkonzentration im aus dem Stahlflachprodukt warmgeformten Bauteil.

Die Erfindung schlägt zwei unterschiedliche Wege für die Herstellung erfindungsgemäßer Stahlflachprodukte vor.

Der erfindungsgemäß für die Herstellung eines erfindungsgemäßen Stahlflachprodukts bevorzugte Verfahrensweg sieht vor, dass ein erfindungsgemäßes Stahlflachprodukt dadurch erzeugt wird, dass ein Stahlsubstrat in Form eines aus einem Stahl, der 0,1 - 3 Gew.-% Mn und bis zu 0,01 Gew.-% B, insbesondere 0,0005 - 0,01 Gew.-% B, aufweist, hergestellten Stahlflachprodukts bereitgestellt und dieses Stahlsubstrat mit einem Schutzüberzug auf Basis von Al beschichtet wird, der 3 - 15 Gew.-% Si, optional bis zu 5 Gew.-% Fe, 0,11 - 0,7 Gew.-% mindestens zweier Elemente aus der Gruppe der Erdalkali- oder Übergangsmetalle entnommenen Legierungsbestandteile, welche eine höhere Sauerstoffaffinität haben als Aluminium, mit der Maßgabe, dass der Magnesium-Gehalt des Schutzüberzugs mindestens 0,1 Gew.-% und der Kalzium-Gehalt des Schutzüberzugs mindestens 0,01 Gew.-% beträgt, sowie optional in Summe bis zu 20 Gew.-% an anderen Legierungselementen enthält. Auch für diesen Beschichtungsvorgang bietet sich das Schmelztauchbeschichten an, wobei hier ein Schmelzenbad für das Schmelztauchbeschichten verwendet wird, dem die erfindungsgemäß vorgesehenen zusätzlichen Legierungsbestandteile bereits zulegiert sind.

Alternativ kann ein erfindungsgemäßes Stahlflachprodukt auch auf einem Verfahrensweg hergestellt werden, bei dem ein Stahlsubstrat in Form eines aus einem Stahl, der 0,1 - 3 Gew.-% Mn und-bis zu 0,01 Gew.-% B, insbesondere 0,0005 - 0,01 Gew.-% B, aufweist und im Übrigen in bekannter Weise weitere Legierungsbestandteile zur Einstellung seiner Eigenschaften aufweisen kann, hergestellten Stahlflachprodukts bereitgestellt wird, anschließend dieses Stahlsubstrat mit einem Schutzüberzug auf Basis von Al beschichtet wird, wobei der Schutzüberzug 3 - 15 Gew.-% Si sowie optional bis zu 5 Gew.-% Fe und weitere Legierungselemente enthalten kann, deren Gehalte in Summe bis zu 25 Gew.-% betragen können, und schließlich auf den erhaltenen Schutzüberzug eine Schicht aufgetragen wird, die aus mindestens zwei Elementen aus der Gruppe der Erdalkali- oder Übergangsmetalle entnommenen Legierungsbestandteile besteht, welche eine höhere Sauerstoffaffinität haben als Aluminium, mit der Maßgabe, dass der Magnesium-Gehalt des Schutzüberzugs mindestens 0,1 Gew.-% und der Kalzium-Gehalt des Schutzüberzugs mindestens 0,01 Gew.-% beträgt, wobei die Dicke der aufgetragenen Schicht so bemessen ist, dass der auf das Gesamtgewicht von Schutzüberzug und aufgetragener Schicht bezogene Gehalt der zusätzlichen Legierungsbestandteile 0,11 - 0,7 Gew.-% beträgt. Die hierzu geeigneten Schichtdicken liegen typischerweise im Bereich von 5 - 35 µm, insbesondere 10 - 25 pm. Dabei zeichnet sich diese Verfahrensvariante dadurch aus, dass sie das Auftragen solcher Schichtdicken mit den genannten zusätzlichen Legierungsbestandteilen ermöglicht, welche dem Überzug in an sich bekannter Weise gezielt beigegeben werden können, um besondere Eigenschaften des Überzugs einzustellen.

Der Al-basierte Schutzüberzug kann besonders wirtschaftlich durch Schmelztauchbeschichten, in der Fachsprache auch "Feueraluminieren" genannt, auf das Stahlflachprodukt aufgebracht werden.

Für den Auftrag der aus den erfindungsgemäß vorgesehenen zusätzlichen Legierungsbestandteilen bestehenden Schicht ist jedes bekannte Verfahren geeignet, dass mit dem die Abscheidung von ausreichend dünnen Schichten auf dem Al-basierten Überzug möglich ist. Zu nennen sind hier die bekannten PVD- (Physical Vapour Deposition) oder CVD-Verfahren (Chemical Vapour Deposition). Ebenso ist es denkbar, die zusätzliche Schicht durch Aufwalzen einer Al-Folie nach Art eines Walzplattierprozesses auf das Stahlsubstrat aufzubringen.

Von den für die erfindungsgemäßen Zwecke zusätzlich im Schutzüberzug eines erfindungsgemäßen Stahlflachprodukts vorgesehenen Erdalkalimetallen sind an erster Stelle Magnesium und Kalzium zu nennen, wobei ergänzend auch Strontium, Natrium oder Barium in Frage kommen.

Von den Übergangsmetallen können beispielsweise Zr und Ti eingesetzt werden. Diese bilden mit dem in dem Al-Schutzüberzug vorhandenen oder eindringenden Wasserstoff metallartige Hydride, deren Aufspaltung deutlich länger dauert als die Erwärmung des Stahlflachprodukts auf die Erwärmungstemperatur, auf die das Stahlflachprodukt für die Warmformgebung erwärmt wird, so dass das Stahlflachprodukt bei Beginn der jeweiligen Warmformgebung die dazu geforderte Warmumformtemperatur aufweist. Um Warmformtemperaturen im Bereich von 700 - 900 °C zu erzielen, liegt dementsprechend die Erwärmungstemperatur praktischerweise bei mindestens 700 °C.

Die gesamte Menge an zum Zwecke der Behinderung einer Wasserstoffaufnahme des Stahlflachprodukts erfindungsgemäß vorgesehenen zusätzlichen Legierungselemente soll im Bereich von 0,11 - 0,7 Gew.-% liegen.

Versuche haben hier ergeben, dass schon geringe Mengen der mindestens zwei erfindungsgemäß vorgesehenen zusätzlichen Legierungsbestandteile für die erfindungsgemäßen Zwecke ausreichend sein können. Hier erweisen sich möglichst geringe Gehalte an für die erfindungsgemäße zusätzlich vorgesehenen Legierungsbestandteilen als günstig, weil dann die Oxidation der zusätzlichen Legierungsbestandteile schnell abgeschlossen, die Oberfläche des Schutzüberzugs entsprechend rasch passiviert ist und von dem zusätzlichen Legierungsbestandteil auch keine übermäßige Wasserstoffbildung ausgeht.

Daher sind die Gehalte an den erfindungsgemäß zum Zwecke der Behinderung der Wasserstoffaufnahme des Stahlflachprodukts vorgesehenen zusätzlichen Legierungsbestandteile bevorzugt auf weniger als 0,5 Gew.-%, insbesondere weniger als 0,45 Gew.-% oder höchstens 0,4 Gew.-%, beschränkt. Dies gilt insbesondere vor dem Hintergrund, dass Versuche hier gezeigt haben, dass auch schon bei Gehalten von bis zu 0,35 Gew.-% gute, für die erfindungsgemäßen Zwecke ausreichende Wirkungen erzielt werden.

Im Fall, dass der Al-Überzug als Schmelztauchbeschichtung aufgebracht und die erfindungsgemäß vorgesehene Menge an zusätzlichen Legierungsbestandteilen dem Schmelzenbad zulegiert wird, hat die Zugabe von geringen Mengen neben der optimierten Behinderung der Wasserstoffaufnahme den Vorteil, dass die andernfalls durch ihre Anwesenheit im Schmelzenbad ausgelöste Gefahr der Entstehung von größeren Schlackemengen auf dem Schmelzenbad minimiert ist. Eine erhöhte Schlackebildung könnte die Überzugsqualität beeinträchtigen.

Als zur Behinderung der Wasserstoffaufnahme besonders geeigneter zusätzlicher Legierungsbestandteil hat sich Magnesium erwiesen, das sich gut in Al-Schutzüberzüge der hier in Rede stehenden Art einlegieren lässt. Die zugegebene Menge an Mg wird dazu so eingestellt, dass im Schutzüberzug mindestens 0,1 Gew.-% und höchstens 0,7 Gew.-% Mg vorhanden sind, wobei, aus den oben schon erläuterten Gründen, Mg-Gehalte von weniger als 0,5 Gew.-%, insbesondere weniger als 0,45 Gew.-% oder bis 0,4 Gew.-% bzw. bis 0,35 Gew.-%, sich in der Praxis für die erfindungsgemäßen Zwecke als besonders günstig erwiesen haben.

Kalzium ist im erfindungsgemäßen Al-Überzug für die erfindungsgemäßen Zwecke als zusätzlicher Legierungsbestandteil in Gehalten von 0,01 - 0,5 Gew.-% vorhanden, wobei auch hier aus den bereits erläuterten Gründen gilt, dass geringe Ca-Gehalte von bis zu 0,02 Gew.-% vorteilhaft sein können.

Aus denselben Gründen kann auch Strontium in einem erfindungsgemäßen Schutzüberzug in Gehalten von 0,005 - 0,25 Gew.-% als zusätzliches Legierungselement vorhanden sein. Dabei kann es auch hier vorteilhaft sein, den Gehalt an Sr auf bis zu 0,15 Gew.-%, insbesondere bis zu 0,10 Gew.-%, zu beschränken.

Barium kann dem erfindungsgemäßen Schutzüberzug als für die erfindungsgemäßen Zwecke zusätzlicher Legierungsbestandteil in Gehalten von 0,005 - 0,25 Gew.-% zugegeben werden, wobei sich aus den erläuterten Gründen hier Ba-Gehalte von 0,005 - 0,05 Gew.-% als besonders günstig erweisen.

Sollen Zirkon und Titan dem Schutzüberzug als zusätzliche Legierungselemente für die erfindungsgemäßen Zwecke zugegeben werden, so kann dies in Mengen von jeweils 0,15 - 0,7 Gew.-% erfolgen, wobei aus den schon erläuterten Gründen Gehalte von höchstens 0,5 Gew.-%, insbesondere höchstens 0,4 Gew.-% oder höchstens 0,35 Gew.-%, besonders günstig sind.

Bei dem Schutzüberzug eines erfindungsgemäßen Stahlflachprodukts handelt es sich um einen AlSi-Überzug, der neben Al 3 - 15 Gew.-% Si enthält. Typische Si-Gehalte von AlSi-Überzügen dieser Art liegen im Bereich von 9 - 12 Gew.-%, wobei ein aus der Praxis bekannter Standard AlSi-Überzug 10 Gew.-% enthält.

Neben dem Si-Gehalt können in dem Al-basierten Schutzüberzug weitere Legierungsbestandteile enthalten sein. Hierzu zählen insbesondere bis zu 5 Gew.-% Fe, die als Verunreinigung in den Überzug gelangen oder für eine optimierte Anbindung des Überzugs an das Stahlsubstrat des Stahlflachprodukts gezielt zugegeben werden können. Der Gehalt an Verunreinigungen im Überzug kann bis zu 0,5 Gew.-% betragen.

Wie schon erwähnt, bilden die erfindungsgemäß vorgesehenen zusätzlichen Legierungsbestandteile spätestens im Zuge der Erwärmung des Stahlflachprodukts mit dem Wasser, mit dem die Atmosphäre des Ofens beladen ist, an der Oberfläche des Schutzüberzugs eine dünne Oxidschicht, die ein Eindringen von Wasserstoff in das Stahlflachprodukt und eine weiteren Wasserstoff freisetzende Oxidation des Aluminiums des Schutzüberzugs behindert. Beim aus einem erfindungsgemäßen Stahlflachprodukt warmgeformten Stahlbauteil ist diese Schicht nur bis zu 200 nm dick, wobei sich in der Praxis Schichtdicken von bis 100 nm als ausreichend erwiesen haben.

Ein Stahlbauteil lässt sich dadurch herstellen, dass ein erfindungsgemäßes Stahlflachprodukt in der voranstehend erläuterten Weise erzeugt wird, dann das Stahlflachprodukt auf eine Warmumformtemperatur erwärmt wird, wobei die Erwärmung unter Umgebungsatmosphäre oder H₂O-reduzierter Atmosphäre erfolgt und schließlich das erwärmte Stahlflachprodukt zu dem Stahlbauteil warmumgeformt wird.

Die Warmformgebung kann dabei in bekannter Weise so ausgeführt werden, dass die Warmformtemperatur so hoch ist, dass das Gefüge des Stahlsubstrats austenitisch ist, und das Stahlflachprodukt nach dem Umformen (zweistufiger Prozess) oder im Zuge des Umformens, d. h. noch im Umformwerkzeug (einstufiger Prozess), abgeschreckt wird, so dass sich im Gefüge des Stahlsubstrats des Stahlflachprodukts Härtegefüge bildet.

Nachfolgend wird die Erfindung anhand von Ausführungsbeispielen näher erläutert. Es zeigen:
- Fig. 1: einen Schichtaufbau eines auf einem Stahlbauteil vorhandenen Schutzüberzugs in einer schematischen Darstellung;
- Fig. 2: ein Diagramm, das das Ergebnis einer GDOES-Messung der oberflächennahen Schichten eines erfindungsgemäßen Stahlflachprodukts nach einem Schmelztauchbeschichten, jedoch vor einem Warmpressformhärten wiedergibt;
- Fig. 3: ein Diagramm, das das Ergebnis einer GDOES-Messung der oberflächennahen Schichten eines erfindungsgemäßen Stahlflachprodukts nach einem Warmpressformhärten wiedergibt;
- Fig. 4: ein Diagramm, in dem die über unterschiedliche Glühdauern eingetretene Wasserstoffaufnahme von mit einem konventionellen AlSi-Schutzüberzug und mit erfindungsgemäßen Schutzüberzügen versehenen Stahlflachprodukten einander gegenübergestellt sind.

Für die zum Nachweis der Wirkung der Erfindung durchgeführten Versuche sind zwei Proben E1 und V eines aus einem MnB-Stahl bestehenden Stahlbands verwendet worden, dessen Zusammensetzung in Tabelle 1 angegeben ist.

**Tabelle 1**

| **C** | **Si** | **Mn** | **P** | **S** | **Al** | **Ti** | **Cr+Mo** | **B** |
|---|---|---|---|---|---|---|---|---|
| 0,22 | 0,25 | 1,16 | 0,014 | 0,002 | 0,038 | 0,023 | 0,21 | 0,0026 |

| | | | | | | | | |
|---|---|---|---|---|---|---|---|---|
| Rest Eisen und unvermeidbare Verunreinigungen, Angaben in Gew.-% | | | | | | | | |

Die zu diesem Zeitpunkt wasserstofffreien Proben E1 und V sind jeweils durch Schmelztauchbeschichten mit einem AlSi-Schutzüberzug versehen, dessen Zusammensetzung in Tabelle 2 angegeben ist.

**Tabelle 2**

| **Probe** | **Si** | **Mg** | **Fe** |
|---|---|---|---|
| E1 | 10 | 0,4 | bis 3 |
| V | 10 | - | bis 3 |

| | | | |
|---|---|---|---|
| Rest Aluminium und unvermeidbare Verunreinigungen, Angaben in Gew.-% | | | |

Das Mindestauflagegewicht des Schutzüberzugs betrug jeweils 120 g/m².

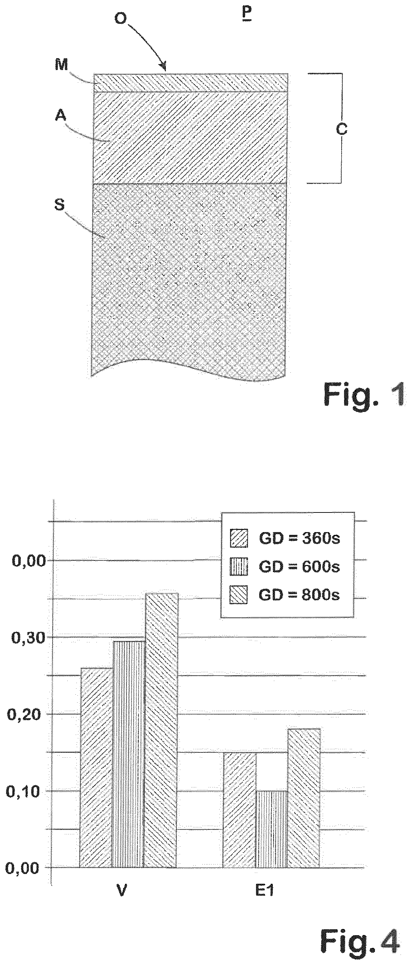

Die so mit einem Schutzüberzug versehenen Stahlflachprodukt-Proben E1 und V sind jeweils im Durchlauf über eine Glühdauer GD von 360 s, 600 s oder 800 s (s. Fig. 4) in einem Ofen unter einer Normalatmosphäre, deren Taupunkt bei +14,0 °C lag, auf 900 °C erwärmt worden. Anschließend sind sie in einer Transferzeit von 4 - 6 Sekunden in ein Warmpressformwerkzeug transportiert und dort zu einem Bauteil warmgeformt worden. Im Zuge der Warmformgebung ist die jeweilige Probe so schnell abgekühlt worden, dass in im Gefüge ihres Stahlsubstrats Härtegefüge entstanden ist.

Wie in Fig. 1 schematisch dargestellt, ist bei den erfindungsgemäßen Proben E1, deren auf dem Stahlsubstrat "S" liegender, FeAl(Si)-Verbindungen umfassender Schutzüberzug "C" als zusätzlichen Legierungsbestandteil jeweils Mg enthält, im Zuge der Glühbehandlung eine an die Oberfläche O des Schutzüberzugs S angrenzende dünne MgO-Schicht "M" entstanden, die neben MgO auch Al₂O₃ enthält. Die Schicht M schirmt die darunter liegende, die FeAl(Si)-Verbindungen umfassende AlSi-Schicht "A" gegenüber der feuchten Ofenatmosphäre "P" ab und verhindert so eine übermäßige Oxidation des Aluminiums der Schicht A.

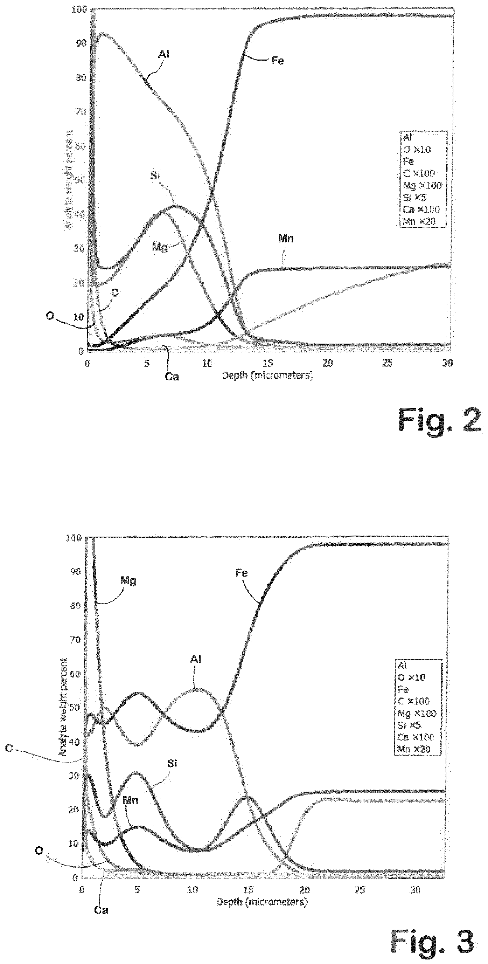

Für die Probe E1 ist in Fig. 2 das Ergebnis einer GDOES-Analyse des Schutzüberzugs nach dem Schmelztauchbeschichten und vor der Warmpresshärtung und in Fig. 3 das Ergebnis einer GDOES-Analyse des Schutzüberzugs nach der Warmpresshärtung dargestellt. Es zeigt sich, dass sowohl vor als auch nach dem Warmpresshärten eine dünne Mg-Schicht auf dem AlSi-Überzug vorhanden ist.

Ein Vergleich der Figuren 2 und 3 zeigt, dass der Magnesiumanteil vor der Presshärtung im Wesentlichen gleichmäßig in der Schicht verteilt ist (Fig. 2), wogegen er sich nach dem Presshärten in einer oberflächennahen Schicht angereichert hat (Fig. 3).

Bei den aus den Proben E1, V in dieser Weise erzeugten Stahlbauteilen ist der Wasserstoffgehalt Hdiff ermittelt worden, der im Zuge der Wärmebehandlung in das Stahlsubstrat eindiffundiert ist.

In Fig. 4 sind die Ergebnisse dieser Untersuchungen für die unterschiedlich lange geglühten Proben E1, V gegenübergestellt. Es zeigt sich, dass der erfindungsgemäße Schutzüberzug selbst dann eine entscheidende Verringerung der Wasserstoffaufnahme bewirkt, wenn Mg nur in sehr geringen Mengen im Schutzüberzug vorhanden ist.

## Patentansprüche

1. Stahlflachprodukt, das aus einem Stahlsubstrat aus einem Stahl mit 0,1 - 3 Gew.-% Mn und 0,0005 - 0,01 Gew.-% B und einem auf das Stahlsubstrat aufgetragenen Schutzüberzug auf Basis von Al besteht, wobei der Schutzüberzug ein AlSi-Überzug mit einem Si-Gehalt von 3 - 15 Gew.-% und optional bis zu 5 Gew.-% Fe ist und wobei der Schutzüberzug als zusätzliche Legierungsbestandteile in Summe 0,11 - 0,7 Gew.-% mindestens zweier Elemente aus der Gruppe der Erdalkali- oder Übergangsmetalle, welche eine höhere Sauerstoffaffinität haben als Aluminium, mit der Maßgabe, dass der Magnesium-Gehalt des Schutzüberzugs mindestens 0,1 Gew.-% und der Kalzium-Gehalt des Schutzüberzugs mindestens 0,01 Gew.-% beträgt, und optional in Summe bis zu 20 Gew.-% an anderen Legierungselementen enthält.

2. Stahlflachprodukt nach Anspruch 1, **dadurch gekennzeichnet, dass** der Mg-Gehalt des Schutzüberzugs 0,1 - 0,5 Gew.-% beträgt.

3. Stahlflachprodukt nach Anspruch 2, **dadurch gekennzeichnet, dass** der Mg-Gehalt des Schutzüberzugs bis zu 0,4 Gew.-% beträgt.

4. Stahlflachprodukt nach einem der voranstehenden Ansprüche, **dadurch gekennzeichnet, dass** der Schutzüberzug durch Schmelztauchbeschichten aufgebracht ist.

5. Verfahren zum Herstellen eines gemäß einem der Ansprüche 1 bis 4 beschaffenen Stahlflachprodukts umfassend folgende Arbeitsschritte:
- Bereitstellen eines Stahlsubstrats in Form eines aus einem Stahl, der 0,1 - 3 Gew.-% Mn und 0,0005 - 0,01 Gew.-% B aufweist, hergestellten Stahlflachprodukts;
- Beschichten des Stahlsubstrats mit einem Schutzüberzug auf Basis von Al, der 3 - 15 Gew.-% Si, optional bis zu 5 Gew.-% Fe und 0,11 - 0,7 Gew.-% mindestens zweier aus der Gruppe der Erdalkali- oder Übergangsmetalle entnommenen Legierungsbestandteile, welche eine höhere Sauerstoffaffinität haben als Aluminium, mit der Maßgabe, dass der Magnesium-Gehalt des Schutzüberzugs mindestens 0,1 Gew.-% und der Kalzium-Gehalt des Schutzüberzugs mindestens 0,01 Gew.-% beträgt, sowie optional in Summe bis zu 20 Gew.-% an anderen Legierungselementen enthält.

6. Verfahren nach Anspruch 5, **dadurch gekennzeichnet, dass** der Schutzüberzug durch Schmelztauchbeschichten auf das Stahlsubstrat aufgebracht wird.

7. Verfahren zum Herstellen eines warmgeformten Stahlbauteils, umfassend folgende Arbeitsschritte:
- Herstellen eines Stahlflachprodukts durch Anwendung eines der in den Ansprüchen 5 oder 6 angegebenen Verfahren;
- Erwärmen des Stahlflachprodukts auf eine Erwärmungstemperatur für das Warmformen, wobei die Erwärmung unter Umgebungsatmosphäre oder unter H₂O-reduzierter Atmosphäre erfolgt;
- Warmformen des Stahlflachprodukts zu dem Stahlbauteil.

8. Verfahren nach Anspruch 7, **dadurch gekennzeichnet, dass** die Erwärmungstemperatur so hoch ist, dass das Stahlflachprodukt zu Beginn des Umformens eine Warumformtemperatur hat, bei der das Gefüge des Stahlsubstrats austenitisch ist, und **dass** das Stahlflachprodukt nach dem Umformen oder im Zuge des Umformens abgeschreckt wird, so dass sich im Gefüge des Stahlsubstrats des Stahlflachprodukts Härtegefüge bildet.

9. Verfahren nach Anspruch 8, **dadurch gekennzeichnet, dass** die Erwärmungstemperatur mindestens 700 °C beträgt.

## Claims

1. A flat steel product which consists of a steel substrate produced from a steel comprising 0.1-3% by weight Mn and 0.0005-0.01% by weight B and a protective coating based on Al that is applied to the steel substrate, wherein the protective coating is an AlSi coating with a Si content of 3-15% by weight and optionally up to 5% by weight Fe and wherein the protective coating contains, as additional alloy constituents, in total 0.11-0.7% by weight of at least two elements from the group of alkaline earth metals or transition metals which have a higher affinity for oxygen than aluminium, provided that the magnesium content of the protective coating is at least 0.1% by weight and the calcium content of the protective coating is at least 0.01% by weight, and that it optionally contains in total up to 20% by weight of other alloy elements.

2. Flat steel product according to Claim 1, **characterised in that** the Mg content of the protective coating is 0.1-0.5% by weight.

3. Flat steel product according to Claim 2, **characterised in that** the Mg content of the protective coating is up to 0.4% by weight.

4. Flat steel product according to any one of the preceding claims, **characterised in that** the protective coating is applied by hot-dip galvanising.

5. Method for manufacturing a flat steel product according to any one of Claims 1 to 4, comprising the following operational steps:
- Providing a steel substrate in the form of a flat steel product produced from a steel containing 0.1-3% by weight Mn and 0.0005-0.01% by weight B;
- Coating of the steel substrate with a protective coating based on Al which contains 3-15% by weight Si, optionally up to 5% by weight Fe and 0.11-0.7% by weight of at least two alloy constituents from the group of alkaline earth or transition metals, which have a higher affinity for oxygen than aluminium, provided that the magnesium content of the protective coating is at least 0.1% by weight and the calcium content of the protective coating is at least 0.01% by weight, and that it optionally contains in total up to 20% by weight of other alloy elements.

6. Method according to Claim 5, **characterised in that** the protective coating is applied onto the steel substrate by hot-dip galvanising.

7. Method for producing a hot-formed steel component, comprising the following operational steps:
- Manufacturing a flat steel product by using one of the methods described in Claim 5 or 6;
- Heating the flat steel product to a heating temperature for hot forming, wherein the heating is performed under ambient atmosphere or under H₂O-reduced atmosphere;
- Hot forming the flat steel product to create the steel component.

8. Method according to Claim 7, **characterised in that** the heating temperature is so high that the flat steel product, at the start of the forming process, has a hot forming temperature at which the microstructure of the steel substrate is austenitic, and **in that** the flat steel product is quenched after or during forming so that a hardened microstructure is formed in the microstructure of the steel substrate of the flat steel product.

9. Method according to Claim 8, **characterised in that** the heating temperature is at least 700°C.

## Revendications

1. Produit plat en acier qui consiste en un substrat en acier, partant d'un acier avec une teneur de 0,1- 3 % en poids de Mn et 0,0005 - 0,01 % en poids de B et en un revêtement de protection à base d'Al, qui est appliqué sur le substrat en acier, sachant que le revêtement de protection est un revêtement de protection AlSi ayant une teneur en Si de 3 - 15 % en poids et, en option jusqu'à 5 % en poids de Fe et sachant que le revêtement de protection contient, en tant que composants d'alliage supplémentaires ayant une affinité oxygène plus élevée que celle de l'aluminium, au total 0,11- 0,7 % en poids d'au moins deux éléments appartenant au groupe des métaux alcalino-terreux ou des métaux de transition, à condition que la teneur en magnésium du revêtement de protections soit d'au moins 0,1 % en poids et la teneur en calcium du revêtement de protections soit d'au moins 0,01 % en poids, et, en option, contienne au total jusqu'à 20 % en poids d'autres éléments d'alliage.

2. Produit plat en acier selon la revendication 1, **caractérisé en ce que** la teneur en Mg du revêtement de protection est de 0,1 - 0,5 % en poids.

3. Produit plat en acier selon la revendication 2, **caractérisé en ce que** la teneur en Mg du revêtement de protection est de jusqu'à 0,4 % en poids.

4. Produit plat en acier selon l'une des revendications précédentes, **caractérisé en ce que** le revêtement de protection est appliqué par revêtement par immersion à chaud.

5. Procédé de fabrication d'un produit plat en acier fabriqué selon l'une des revendications 1 à 4, comprenant les étapes suivantes :
- mise à disposition d'un substrat en acier sous la forme d'un produit plat en acier, fabriqué à partir d'un acier qui présente 0,1 - 3 % en poids de Mn et 0,0005 - 0,01 % en poids de B,
- Revêtement des Substrat en acier avec un revêtement de protection à base d'Al, qui contient 3 - 15 en poids de Si, en option jusqu'à 5 % en poids de FE et 0,11 - 0,7 % en poids d'au moins deux composants d'alliage appartenant au groupe des métaux alcalino-terreux ou des métaux de transition, lesquels présentent une affinité oxygène plus élevée que celle de l'aluminium, à condition que la teneur en magnésium du revêtement de protections soit d'au moins 0,1 % en poids et la teneur en calcium du revêtement de protections soit d'au moins 0,01 % en poids et, en option, qu'il contienne au total jusqu'à 20 % en poids d'autres éléments d'alliage,

6. Procédé selon la revendication 4, **caractérisé en ce que** le revêtement de protection est appliqué sur le substrat par revêtement par immersion à chaud.

7. Procédé de fabrication d'un composant en acier formé à chaud, comprenant les étapes suivantes :
- Fabrication d'un produit plat en acier selon un procédé exposé dans l'une des revendications 5 ou 6
- chauffage du produit plat en acier à une température de chauffage pour le formage à chaud, sachant que le chauffage est effectué dans l'atmosphère ambiante ou une atmosphère avec réduction de H₂0;
- formage à chaud du composant en acier à partir du produit plat en acier.

8. Procédé selon la revendication 7, **caractérisé en ce que** la température de chauffage est si élevée que le produit plat en acier, au début du formage, ait une température de formage à chaud, à laquelle la structure du substrat en acier est austénitique et que le produit plat en acier, après le formage et ou au cours du formage, est refroidi brusquement de manière à ce que, dans la structure du substrat en acier du produit plat en acier, se forme une structure de durcissement.

9. Procédé selon la revendication 8, **caractérisé en ce que** la température de chauffage est d'au moins 700 °C.
